(19) Europäisches Patentamt
European Patent Office
Office européen des brevets

(11) Veröffentlichungsnummer: **0 253 172 B1**

(12) **EUROPÄISCHE PATENTSCHRIFT**

(45) Veröffentlichungstag der Patentschrift: **14.10.92**

(51) Int. Cl.⁵: **C08G 18/76**, C08G 18/77, C08G 18/78, C08G 18/81, C09K 19/38

(21) Anmeldenummer: **87109175.7**

(22) Anmeldetag: **26.06.87**

Die Akte enthält technische Angaben, die nach dem Eingang der Anmeldung eingereicht wurden und die nicht in dieser Patentschrift enthalten sind.

# (54) Prepolymer mit endständigen NCO-Gruppen, dessen Herstellung und Verwendung zur Herstellung von Polyurethanen.

(30) Priorität: **05.07.86 DE 3622609**

(43) Veröffentlichungstag der Anmeldung:
**20.01.88 Patentblatt 88/03**

(45) Bekanntmachung des Hinweises auf die Patenterteilung:
**14.10.92 Patentblatt 92/42**

(84) Benannte Vertragsstaaten:
**AT DE FR GB IT NL**

(56) Entgegenhaltungen:
**DE-C- 1 078 115** **DE-C- 1 085 869**
**GB-A- 934 458** **US-A- 3 014 894**
**US-A- 3 180 883** **US-A- 3 644 289**

**CHEMICAL ABSTRACTS, Band 90, Nr. 4, 22. Januar 1979, Seite 13, Zusammenfassung Nr. 23918c, Columbus, Ohio, US; A. BARBALATA et al.: "The influence of the structure of aromatic diisocyanates on the preparation and the properties of polyurethanes", & EUR. POLYM. J. 1978, 14(6), 427-30**

(73) Patentinhaber: **BAYER AG**

**W-5090 Leverkusen 1 Bayerwerk(DE)**

(72) Erfinder: **Müller, Hanns Peter, Dr.**
**Im Weizenfeld 36**
**W-5060 Bergisch Gladbach 2(DE)**
Erfinder: **Gipp, Roland, Dr.**
**Jakob-Böhme-Strasse 2**
**W-5000 Köln 80(DE)**
Erfinder: **Grögler, Gerhard, Dr.**
**von Diergardt-Strasse 46**
**W-5090 Leverkusen 1(DE)**
Erfinder: **König, Klaus, Dr.**
**Zum Hahnenberg 40**
**W-5068 Odenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Flüssig-kristalline (LC)-Polymere sind in jüngster Zeit von vielen Autoren bechrieben worden. W.J. Jackson, Ir., Brit. Polym. Journ. 12 (1980) 154 beschreibt die Eigenschaften von LC-Polymeren aromatischer Polyester, die nach folgendem Bauprinzip hergestellt sind:

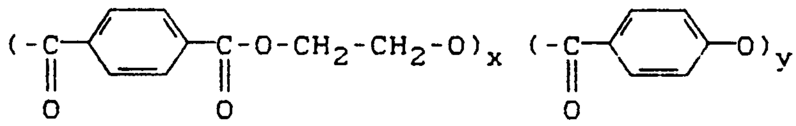

Auf der 16. Freiburger Arbeitstagung Flüssigkristalle vom 19. bis 21. März 1986 im Frauenhofer Institut für Angewandte Festkörperphsik, Eckertstraße 4, 7800 Freiburg, wurden die neuesten Arbeiten über LC-Polymere veröffentlicht. Polyurethankunststoffe aus flüssig-kristallinen Prepolymeren sind bisher nicht bekannt geworden.

Nach dem klassischen Weygand'schen Bauprinzip für Flüssigkristalle enthalten stabile flüssig-kristalline Verbindungen aromatische Ringe mit mesomeriefähigen zweiatomigen Mittelstücken [Ch. Wiegand, Z. Naturforsch. 6b, 240 (1951)].

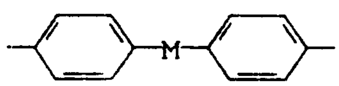

M = z.B. -CH=CH-); -N=N-); -CH=N- ); 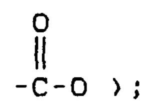

In den letzten Jahren wurde indessen bekannt, daß auch alicyclische Ringsysteme anstelle von aromatischen zu thermisch stabilen Flüssigkristallen führen [K. Praefcke, D. Schmidt, G. Heppke, Chem. Ztg. 104, 269 (1980)].

Bei den flüssig-kristallinen Verbindungen unterscheidet man mindestens drei charakteristische Phasen, die unter dem Polarisationsmikroskop beobachtet werden, die smektische Phase, die nematische Phase und die cholesterische Phase [R. Steinsträßer, L. Pohl, Angew. Chem. 85 (1973), 706].

Nach Auffindung der verschiedenen Anwendungsmöglichkeiten von nematischen flüssig-kristallinen Verbindungen wurde intensiv nach geeigneten nematischen Substanzen mit möglichst niedrigen Schmelz- und möglichst hohen Klärpunkten, mit günstigen anisotropen Eigenschaften und ausreichender Stabilität gegenüber chemischen und physikalischen Einflüssen gesucht.

Diisocyanate vom Typ der aromatischen Ester sind lange bekannt (s. DE-PS 1 085 869).

Es wurde gefunden, daß die in der DE-PS 1 085 869 beschriebenen Diisocyanate eine ausgeprägte nematische Phase aufweisen. Eine quantitative DTA-Messung an der Verbindung (I)

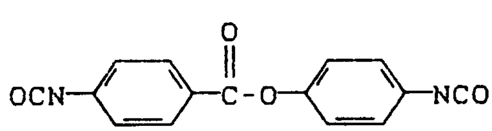

(I)

zeigte beim Aufheizen unter Schmelzen eine Übergang bei 117,2 °C fest → nematisch und bei 172,6 °C einen Übergang nematisch → isotrop flüssig. Beim Abkühlen der Schmelze erfolgt bei 172 °C der Übergang isotrop flüssig nematisch und bei 102 °C der Übergang nematisch → fest.

Auch die quantitative polarisationsmikroskopische Messung zeigt diese Phasenübergänge.

Aufheizen:

117,5 °C Übergang fest → nematisch ; 172,1 °C Übergang nematisch → isotrop flüssig

Abkühlen:

172,5 °C Übergang isotrop flüssig → nematisch ; 101,1 °C Übergang nematisch → fest

Technisch besonders interessant sind aber Substanzen mit möglichst hohen Ordnungsgraden. (2-Phasig) NCO-Prepolymere und -Semiprepolymere, die das Diisocyanat der Formel (I) enthalten, stellen geordnete zweiphasige Verbindungen dar, die (zumindest) im Temperaturbereich von 3 bis 300 ° C keine Phasenänderung aufweisen. Dieser Befund ist deswegen so überraschend und war für den Fachmann nicht vorherzusehen, da zumindest die Semiprepolymere das freie Diisocyanat gemäß Formel (I) enthalten und daher erwartet werden müßte, daß das freie Diisocyanat (I) beim Aufheizen schmilzt, was sich in einer Phasenumwandlung in der quantitativen Diffentialthermoanalyse (DTA) bemerkbar machen sollte. Dies ist überraschenderweise aber nicht der Fall.

Gegenstand der Erfindung sind Prepolymere mit endständigen NCO-Gruppen, erhältlich durch Umsetzung von 1 Mol einer 2 Hydroxylgruppen aufweisenden Verbindung vom Molekulargewicht 400 - 10000 und 1,2 - 4 Mol eines Diisocyanates der Formel

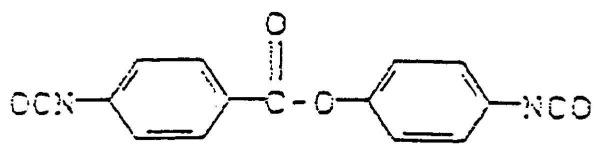

Gegenstand der Erfindung ist ferner ein Verfahren zur Herstellung des Prepolymers durch Umsetzung von 1 Mol einer 2 Hydroxylgruppen aufweisenden Verbindung vom Molekulargewicht 400 bis 10000 und 1,2 bis 4 Mol eines Diisocyanates der Formel

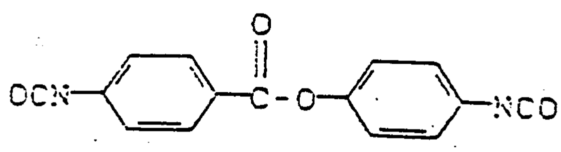

Bevorzugt erfolgt die Umsetzung bei Temperaturen von 20 ° bis 220 ° C, wobei das Isocyanat (I) gegebenenfalls mit einem Hilfslösemittel gelöst eingesetzt wird. Bevorzugt erfolgt die Umsetzung in PVC-Weichmachern, bevorzugt auf Polyesterbasis, insbesondere Dibutylphthalat oder Dioctylphthalat.

Gegenstand der Erfindung ist ferner die Verwendung der erfindungsgemäßen Prepolymere zur Herstellung von Polyurethan en. Zur Herstellung der Polyurethane wird

a) das erfindungsgemäße Prepolymer mit einer der nachstehenden Komponenten umgesetzt :

b) mindestens zwei gegenüber Isocyanatgruppen aktive Wasserstoffatome aufweisenden Verbindungen vom Molekulargewicht 400 bis 10,000,

c) mindestens zwei gegenüber Isocyanatgruppen aktive Wasserstoffatome aufweisenden Verbindungen vom Molekulargewicht 18 bis 399, sowie gegebenenfalls

d) Verbindungen mit einem gegenüber Isocyanaten reaktionsfähigen Wasserstoffatom vom Molekulargewicht 32 - 500, gegebenenfalls in Gegenwart von

e) aus der Polyurethanchemie an sich bekannten Hilfs- und Zusatzmitteln.

Bei den geordneten Polyisocyanat-Prepolymeren, die im Temperaturbereich von 3 bis 300 ° C keine Phasenänderung aufweisen, handelt es sich um (nicht homogene) "weiße" viskose Flüssigkeiten bzw. um weiße "Lösungen".

Bei der Herstellung von Polyurethanen Können zusätzlich gegebenenfalls auch andere bekannte Diisocyanate eingesetzt werden, wobei aber die Diisocyanate der allgemeinen Formel (I) einen Anteil von mindestens 10 Gew.-%, vorzugsweise zumindestens 50 %, bezogen auf gesamtes verwendetes Isocyanat, haben sollen. Konventionelle aliphatische, cycloaliphatische, araliphatische und aromatische bzw. heterocyclische Polyisocyanate, bzw. deren Mischungen werden z.B. von W. Siefken in Justus Liebigs Annalen der Chemie, 562, Seiten 75-136, bzw. in der DE-A 2 832 253 ausführlich beschrieben. Besonders bevorzugt werden die technisch leicht zugänglichen Polyisocyanate, z.B. das 2,4- und/oder 2,6-Toluylendiisocyanat, sowie beliebige Gemische dieser Isomeren (TDI), Diphenylmethandiisocyanat-4,4'- und/oder 2,4'-und/oder 2,2'-Isomere, Polyphenyl-polymethylen-polyisocyanate, wie sie durch Anilin-Formaldehydkondensation und an schließende Phosgenierung hergestellt werden ("rohes MDI") und "modifizierte Polyisocyanate", wie z.B. Carbodiimidgruppen, Urethangruppen, Allophanatgruppen, Isocyanuratgruppen, Harnstoffgruppen und/oder Biuretgruppen aufweisen, insbesondere solche modifizierten Polyisocyanate die sich vom 2,4- und/oder 2,6-Toluylendiisocyanat bzw. vom 4,4'- und/oder 2,4'-Diphenylmethandiisocyanat ableiten. Naphthylen-1,5-Diisocyanat ist ebenfalls geeignet. Auch aliphatische Diisocyanate sind geeignet, z.B. Hexamethylendiisocyanat, Dicyclohexylmethan-4,4'-diisocyanat,Cyclohexan-1,4-diisocyanat trans,trans-cyclohexan-1,4-diisocyanat oder biuretisierte Polyisocyanate, abgeleitet von obigen Diisocyanaten oder von Isophorondiisocyanat, sowie Trimerisate der genannten Diisocyanate.

Verwendet man trifunktionelle Isocyanate, so ist darauf zu achten, daß durch vorhergehende partielle Umsetzung der Triisocyanate mit aliphatischen oder aromatischen Mono-Alkoholen oder Mono-Aminen statistisch difunktionelle modifizierte Isocyanate gebildet werden.

Als weitere Ausgangskomponenten zur Herstellung der Polyurethane kommen Verbindungen mit mindestens zwei gegenüber Isocyanaten reaktionsfähigen Wasserstoffatomen von einem Molekulargewicht von 400 bis 10.000 infrage (Komponente b)). Hierunter versteht man neben Amino-, Thiol-und/oder Carboxylgruppen aufweisenden Verbindungen, vorzugsweise Hydroxylgruppen, insbesondere 2 bis 4 Hydroxylgruppen aufweisende Verbindungen, speziell solche vom Molekulargewicht von 800 bis 6.000, vorzugsweise aber 2 bis 2,2 Hydroxylgruppen aufweisende Polyester, Polyether, Polythioether, Polyacetale, Polycarbonate und Polyesteramide, wie sie für die Herstellung von homogenen oder zellförmigen Polyurethanen an sich bekannt sind und wie sie z.B. in der DE-A 2 832 253, Seiten 11-18 beschrieben werden. Besonders bevorzugt sind Polyether, die durch Addition von einem oder mehreren Alkylenoxiden (Ethylenoxid und besonders Propylenoxid) und zwei- oder mehrwertige "Starter" (z.B. Propylenglykol, Glycerin, Triethanolamin, Trimethylolpropan oder andere erhalten werden, sowie Polyether, welche Polyadditionsprodukte aus Diisocyanaten aus Hydrazin und/oder Diaminen und/oder Glykolen oder Polymerisate und/oder Pfropfpolymerisate, vorzugsweise aus Styrol und Acrylnitril, dispergiert oder gelöst enthalten. Weiter geeignet sind Polyester, einschließlich Polycarbonaten, wie sie üblicherweise als Weichsegment verwendet werden. Die bevorzugten höhermolekularen Verbindungen dieser Art haben Schmelzpunkte in der Regel unterhalb von 60, vorzugsweise unterhalb von 45 ° C. Bevorzugt werden Hydroxylgruppen aufweisende höhermolekulare Verbindungen mit einer Funktionalität von 2.

Gegebenenfalls können als Ausgangskomponenten Verbindungen mit mindestens zwei gegenüber Isocyanaten reaktionsfähigen Wasserstoffatomen und einem Molekulargewicht von 18 bis 399 verwendet werden (Komponente c)). Auch in diesem Fall versteht man hierunter Hydroxylgruppen und/oder Aminogruppen und/oder Thiolgruppen und/oder Carboxylgruppen und/oder Hydrazidgruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele werden hierfür in der DE-A 2 832 253 (Seiten 19-20) beschrieben. Beispielsweise genannt seien Wasser, Ethylenglykol, Butandiol-1,4, 2,2-Dimethylpropandiol, Trimethylolpropan, Formitgemische, Hydrazin, Ethylendiamin, 3,3′-Dimethyl-4,4′-diaminodicyclohexylmethan, 3,5-Diethyl-2,4- (und/oder 2,6)-diaminotoluol oder Adipinsäuredihydrazid oder ihre Gemische.

Als Kettenabbrecher (Komponente d)) können im Prinzip alle monofunktionellen, relativ niedermolekularen (Molekulargewicht 32 bis 500) Verbindungen mit einem gegenüber NCO reaktivem Wasserstoffatom verwendet werden, z.B. Monoalkohole wie Methanol, n-Octanol, Isopropanol, Isooctylalkohol oder Stearylalkohol; primäre oder sekundäre Monoamine wie Ethylamin, Di-n-butylamin, Diisopropylamin, Stearylamin, 4-Amino-2,2,6,6-tetramethylpiperidin, Acethydrazid, Stearylhydrazid, Anilin oder Thiolverbindungen wie Octylmercaptan. Bevorzugt sind monofunktionelle Alkohole, Amine oder Thiole.

Die Ausgangskomponenten a), b), c) und d) werden erfindungsgemäß vorzugsweise zu linearen Polyurethanen umgesetzt, z.B. zu (thermoplastischen) Elastomeren, aber auch zu Beschichtungen und Überzügen. Die NCO-Prepolymeren werden mit den Komponenten b), c) und/oder d) in der Regel in etwa äquivalenten Mengen umgesetzt.

Dabei können die aus der Polyurethanchemie an sich bekannten Hilfs- und Zusatzmittel, z.B. Wasser, Katalysatoren, oberflächenaktive Zusatzstoffe, Reaktionsverzögerer, Weichmacher oder fungistatisch oder bakteriostatisch wirkende Substanzen, Stabilisatoren und Lichtschutzmittel, ferner Füllstoffe wie Bariumsulfat, Kieselgur, Ruß, Schlämmkreide, Glasfasern, Kohlenstofffasern, Aramidfasern und dichroitische Farbstoffe mitverwendet werden (Komponente e)).

Die Reaktionskomponenten werden zur Umsetzung gebracht, indem man sich oft maschineller Einrichtungen bedient. Einzelheiten über Verarbeitungseinrichtungen, die auch erfindungsgemäß infrage kommen, werden im Kunststoffhandbuch, Band VII, herausgegeben von Vieweg und Höchtlen, Carl-Hanser-Verlag, München, 1966, beschrieben. Die Reaktionstemperaturen liegen in der Regel im Bereich von 80 ° C-200 ° C, vorzugsweise im Bereich von 90 ° C-140 ° C. Die Aushärtezeiten (Reaktionszeiten zur Bildung der Polymernetzwerke) liegen je nach Wahl der Ausgangskomponenten und der verwendeten Katalysatoren und maschinellen Mischvorrichtungen zwischen 1 Minute und 24 Stunden.

Beispiel 1

400 g eines auf Propylenglykol gestarteten (linearen) Propylenoxid-Polyethers der OH-Zahl 56 mit einer mittleren Funktionalität von 2 und einem mittleren Molekulargewicht von 2.000 werden mit 153 g Dibutylphthalat gemischt und bei 130 ° C/18 mbar 2 Stunden lang entwässert. Man läßt auf Raumtemperatur erkalten und gibt 214 g des gemäß DE-B 1 085 869 hergestellten 4-Isocyanato-benzoesäure-4-isocyanatophenylesters in fein pulverisierter Form hinzu und heizt die Mischung bei 130 ° C und 18 mbar 3 Stunden unter Rühren. Man erhält eine weiße viskose Flüssigkeit mit folgenden Kenndaten:

% NCO: 5,4 (NCO Prepolymer (1))
Viskosität: 1.355 mPas/60 ° C.

Polarisationsmikroskopische Messung: (Gerät Mettler FP 5, 60-fache Vergrößerung, gekreuzte Polarisationsfilter):
Es lassen sich kleine geordnete Bezirke beobachten, die bei niedrigen Temperaturen in der vorliegenden Matrix eine hohe Beweglichkeit aufweisen. Ab ca. 120 ° C nimmt die Viskosität schnell zu und die geordneten Einschlüsse werden unbeweglich. Im Mikroskop lassen sich bis 300 ° C keine Phasenumwandlungen beobachten.

185 g des oben beschriebenen NCO-Prepolymers (1) werden bei 110 ° C mit 24,1 g 4-Chlor-3,5-diamino-benzoesäureisobutylester gemischt, entgast und in eine vorgewärmte Form von 110 ° C gegeben. Temperung 24 Std. bei 110 ° C. Man erhält ein opakes Elastomer mit hervorragenden Eigenschaften.

Beispiel 2

350 g des in Beispiel 1 beschriebenen Polyetherdiols werden 2 Stunden bei 120 ° C und 18 mbar unter Rühren entwässert. Man läßt auf 110 ° C abkühlen und gibt 98 g 4-Isocyanatobenzoesäure-4-isocyanatophenylester hinzu und heizt das Ganze unter Rühren und bei 18 mbar langsam auf eine Innentemperatur von 180 ° C auf. Bei dieser Temperatur wird der Ansatz 2 Stunden lang gerührt. Nach Abkühlen erhält man ein NCO-Prepolymer (2) mit folgenden Kenndaten:

% NCO: 2,38
Viskosität: 18.074 mPas/60 ° C
Aussehen: weiße Dispersion.

Die polarisationsmikroskopische Untersuchung zeigt in der vorliegenden Matrix bis 300 ° C keine Umwandlung. Phasenumwandlungen müßten auch als endotherme Signale, bei der DTA-Messung sichtbar werden. Um das Abkühlverhalten der Probe zu untersuchen, wurden Tieftemperaturmessungen bis -50 ° C durchgeführt. Beim Abkühlen konnte bis zu dieser Temperatur kein Erstarren gemessen werden. Daher wurde die Probe in flüssigem Stickstoff kristallisiert und ab -50 ° C beim Aufheizen gemessen. Das Schmelzen zeigte sich bei ca. +3 ° C, d.h. die Probe kann über einen großen Temperaturbereich gekühlt werden. DTA-Messung: Gerät Mettler TA 2000, quantitative Meßzellen, Alutiegel.

150 g des oben beschriebenen NCO-Prepolymer (2) werden mit 4,3 g Butandiol-(1,4) gemischt, entgast und in eine vorgewärmte Form (90 ° C) gegeben. Temperung 6 Std. bei 90 ° C, anschließend 12 Std. bei 120 ° C. Man erhält ein opakes Elastomer mit hervorragenden mechanischen Eigenschaften.

Beispiel 3

56 g (0,2 Mol) 4-Isocyanatobenzoesäure-4-isocyanatophenylester werden in 250 ml trockenem Chlorbenzol unter Rühren und $N_2$ beim Sieden gelöst, dann werden bei 130 ° C 200 g (0,1 Mol) eines linearen Polypropylenglykols (MG 2000) zugetropft und 3 Stunden bei den gleichen Bedingungen nachgerührt. Das Lösungsmittel wird unter Rühren bei 100 ° C Badtemperatur und 13 - 3 Torr (17 - 4 h Pa) abgezogen. Man erhält auf diese Weise ein weißes hochviskoses Prepolymer, das 2,57 % NCO aufweist.

150 g des so hergestellten Prepolymers werden auf 100 ° C aufgeheizt, durch Anlegen eines Vakuums entgast, mit 4,2 g Butandiol-1,4 versetzt, gut gemischt und in eine auf 100 ° C vorgeheizte Form (18 x 18 x 0,4 cm) gegossen. Die Platte wird 6 Stunden bei 90 ° C und anschließend 12 Stunden bei 120 ° C getempert.

Man erhält auf diese Art und Weise ein opakes, 2-phasiges Elastomer mit vorzüglichen Rückpralleigenschaften.

Ein unter den gleichen Bedingungen hergestelltes Elastomer aus 1,5-Naphthylendiisocyanat anstelle von 4-Isocyanatobenzoesäure-4-isocyanatophenylester ist durchsichtig und dementsprechend 1-phasig.

Beispiel 4

550 g (0,275 Mol) eines linearen Polyesters aus Adipinsäure und Ethylenglykol (MG 2000) werden 2 Stunden unter Rühren bei 120 °C und 15 mbar entwässert, sodann werden bei 110 °C 154 g (0,55 Mol) 4-Isocyanatobenzoesäure-4-isocyanatophenylester in pulverisierter Form zugegeben und das Ganze 2 h bei 110 °C gerührt; danach ist der NCO-Gehalt der Mischung auf 1,72 % NCO abgefallen. Das Prepolymer wird in eine Form gegossen. Durch Einwirkung der Luftfeuchtigkeit entsteht innerhalb von 10 Tagen ein blasenfreier, weißer Formkörper, mit vorzüglichen Elastomereigenschaften. Im Polarisationsmikroskop zeigt sich die hohe Ordnung des entstandenen PU-Polyharnstoffs in regelmäßigen farbigen Domänen.

193 g des oben beschriebenen Prepolymers mit einem NCO-Gehalt von 1,724. = 0,075 Mol NCO werden sofort nach der Herstellung bei 120 °C mit 3,4 g Butandiol-1,4 = 0,075 Mol OH vermischt und in eine vorgeheizte Form gegossen. Nach 24 h bei 120 °C entsteht ein weißes, hochelastisches Polyurethan-Elastomer.

Beispiel 5

Zu 200 g (0,1 Mol) eines vorher im Wasserstrahlvakuum bei 80 bis 100 °C entwässerten linearen Polyesters aus Adipinsäure und Ethylenglykol (OH-Zahl = 56, Mol-Gewicht = 2000) nachdem 50,4 g (0,18 Mol) 4-Isocyanatobenzoesäure-4'-isocyanatophenylester (MG = 280, NCO = 29,5 % ; ber. 30,0 °C) in geschmolzener Form zugesetzt. Der Reaktionsansatz wird unter Rühren so lange bei ca. 100 °C gehalten, bis der NCO-Gehalt von ca. 3 % erreicht ist. (15 bis 25 Minuten) Danach wird kurz entgast und es erfolgt der Zusatz von 6 g (0,067 Mol) Butandiol-(1,4). Nach einer Einwirkung von ca. 2 bis 3 Minuten wird der flüssige Ansatz ein eine mit Trennmittel versehene Form gegossen, die dann bei 120 °C ausgeheizt wird. Der verfestigte Formkörper wird anschließend noch 4 bis 6 Stunden bei 120 °C nachgetrocknet. Man erhält ein hochelastisches Polyurethan-Elastomer mit folgenden mechanischen Eigenschaften.

| Gießzeit (Topfzeit) bei 100$^0$C (Min) | ca. 3 |
|---|---|
| Modul (100%) (MPA) | 5,12 |
| Zugfestigkeit (MPa) | 36,5 |
| Bruchdehnung (%) | 700 |
| Weiterreißfestigkeit (KN/m) | 57,8 |
| Elastizität (%) | 48 |
| Härte (Shore A) | 87 |

Dieses Elastomer zeigt eine sehr hohe Wärmeformstabilität. Eine Erweichung der Probe tritt laut Thermomechanischer Analyse (TMA) erst in einem Temperaturbereich von 180 - 200 °C ein.

Beispiel 6 (Vergleich)

Wird das in Beispiel 5 genannte Diisocyanat (50,4 g) durch 4-Isocyanatobenzoesäure-3-methyl-4-isocyanatophenylester (53,8 g) [Molgewicht = 294, Fp: 72-74°, NCO = 28,3% (ber. 28,6%)] ersetzt, so erhält man nach der in Beispiel 5 genannten Arbeitsweise einen Formkörper mit folgenden mechanischen Eigenschaften:

| | |
|---|---|
| Gießzeit (Topfzeit) bei 100 °C | ca. 20 |
| Modul (100%) (MPa) | 3,5 |
| Zugfestigkeit (MPa) | 32,7 |
| Bruchdehnung (%) | 750 |
| Weiterreißfestigkeit (KN/m) | 38,5 |
| Elastizität (%) | 32 |
| Härte (Shore A) | 75 |

**Patentansprüche**

1. Prepolymer mit endständigen NCO-Gruppen, erhältlich durch Umsetzung von 1 Mol einer 2 Hydroxylgruppen aufweisenden Verbindung vom Molekulargewicht 400 - 10000 und 1,2 - 4 Mol eines Diisocyanates der Formel

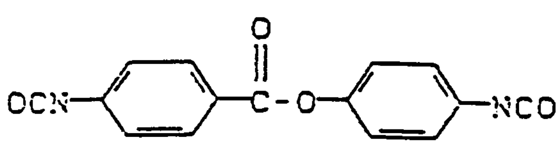

2. Verfahren zur Herstellung des Prepolymers nach Anspruch 1 durch Umsetzung von 1 Mol einer 2 Hydroxylgruppen aufweisenden Verbindung vom Molekulargewicht 400 bis 10000 und 1,2 bis 4 Mol eines Diisocyanates der Formel

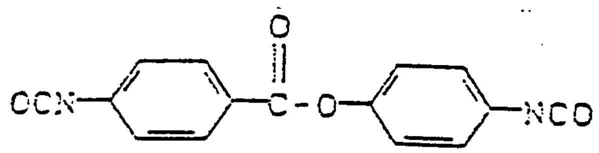

3. Verwendung von Prepolymeren nach Anspruch 1 zur Herstellung von Polyurethan en.

**Claims**

1. An NCO-terminated prepolymer obtainable by reaction of 1 mol of a compound containing two hydroxyl groups and having a molecular weight of 400 to 10,000 and 1.2 to 4 mol of a diisocyanate corresponding to the following formula

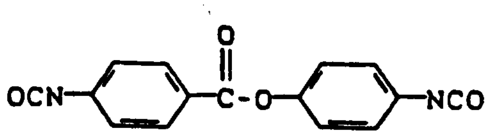

2. A process for the production of the prepolymer claimed in claim 1 by reaction of 1 mol of a compound containing two hydroxyl groups and having a molecular weight of 400 to 10,000 and 1.2 to 4 mol of a diisocyanate corresponding to the following formula

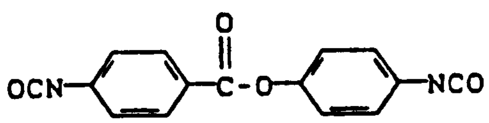

3. The use of the prepolymers claimed in claim 1 for the production of polyurethanes.

**Revendications**

1. Prépolymère à groupes terminaux NCO, obtenu par réaction de 1 mol d'un composé à deux groupes hydroxy, de poids moléculaire 400 à 10 000, et 1,2 à 4 mol d'un diisocyanate de formule

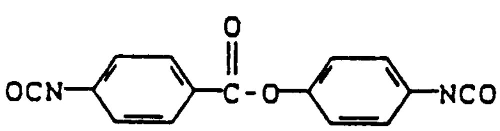

2. Procédé de préparation du prépolymère de la revendication 1, par réaction de 1 mol d'un composé à deux groupes hydroxy, de poids moléculaire 400 à 10 000, et 1,2 à 4 mol d'un diisocyanate de formule

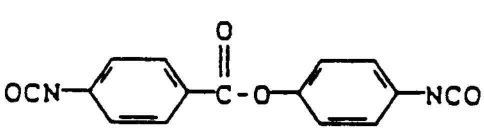

**3.** Utilisation du prépolymère de la revendication 1 pour la préparation de polyuréthannes.